(19) Europäisches Patentamt
European Patent Office
Office européen des brevets

(11) **EP 1 986 127 B1**

(12) **EUROPÄISCHE PATENTSCHRIFT**

(45) Veröffentlichungstag und Bekanntmachung des Hinweises auf die Patenterteilung:
**12.05.2010 Patentblatt 2010/19**

(51) Int Cl.:
***G06K 9/00*** *(2006.01)*
*G01C 11/04* *(2006.01)*
*G01J 3/28* *(2006.01)*
*G06K 9/46* *(2006.01)*
*G01N 21/25* *(2006.01)*

(21) Anmeldenummer: **08007617.7**

(22) Anmeldetag: **18.04.2008**

(54) **Erzeugung von Endmember-Spektren**

Creation of endmember spectra

Production de spectres d'éléments d'extrémité

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **23.04.2007 DE 102007020233**

(43) Veröffentlichungstag der Anmeldung:
**29.10.2008 Patentblatt 2008/44**

(73) Patentinhaber: **Deutsches Zentrum für Luft- und Raumfahrt e.V.**
**51147 Köln (DE)**

(72) Erfinder:
• **Borg, Erik**
**16247 Joachimsthal (DE)**
• **Gerighausen, Heike**
**17235 Neustrelitz (DE)**

(74) Vertreter: **Patentanwälte Bressel und Partner**
**Radickestrasse 48**
**12489 Berlin (DE)**

(56) Entgegenhaltungen:
**US-A1- 2002 096 622     US-A1- 2006 115 158**
**US-A1- 2007 031 042     US-B1- 6 208 752**
**US-B1- 6 282 301         US-B1- 6 356 646**
**US-B1- 6 804 400**

• **GLENN HEALEY ET AL: "Models and Methods for Automated Material Identification in Hyperspectral Imagery Acquired Under Unknown Illumination and Atmospheric Conditions" IEEE TRANSACTIONS ON GEOSCIENCE AND REMOTE SENSING, IEEE SERVICE CENTER, PISCATAWAY, NJ, US, Bd. 37, Nr. 6, 1. November 1999 (1999-11-01), XP011021398 ISSN: 0196-2892**
• **ELMORE A J ET AL: "Precision and accuracy of eo-1 advanced land imager (ali) data for semiarid vegetation studies" IEEE TRANSACTIONS ON GEOSCIENCE AND REMOTE SENSING, IEEE SERVICE CENTER, PISCATAWAY, NJ, US, Bd. 41, Nr. 6, 1. Juni 2003 (2003-06-01), Seiten 1311-1320, XP011099671 ISSN: 0196-2892**
• **ASPINALL R J ET AL: "Considerations in collecting, processing, and analysing high spatial resolution hyperspectral data for environmental investigations" INTERNATIONAL JOURNAL OF GEOGRAPHICAL INFORMATION SYSTEMS, LONDON, GB, Bd. 4, Nr. 1, 1. März 2002 (2002-03-01), Seiten 15-29, XP002385417 ISSN: 0269-3798**

## Beschreibung

Die Erfindung betrifft ein Verfahren und eine Anordnung zum Erzeugen von Spektren, insbesondere von Spektren für die Entmischung von Spektren, die durch Fernerkundung einer Planetenoberfläche mit hyperspektralen Sensoren gewonnen werden. Die Sensoren können z. B. an Flugzeugen oder Satelliten angeordnet sein.

Bei der Femerkundung von Planetenoberflächen, insbesondere der Erde, werden von den Sensoren Objekte erfasst, die unterschiedlichen Klassen angehören, z. B. Boden, Wasser, Schnee, Getreide, Gebirge. Aber auch Innerhalb der einzelnen Klassen variieren die Reflexionseigenschaften für die Reflexion der einfallenden Strahlung erheblich. Zum Beispiel kann der Boden unterschiedliche Anteile von Ton, Schluff und Sand enthalten. Auch werden die Reflexionseigenschaften von Boden durch den Feuchtegehalt beeinflusst. Hinzukommt, dass ein von einem Sensorpixel erfasster Bereich der Planetenoberfläche eine Mischung von Objekten unterschiedlicher Klassen aufweisen kann, z. B. Boden und Wasser oder Boden und schneebedeckter Boden.

Solch komplexe Zusammenhänge sind mit Modellen in der Regel nur mit hohem Aufwand und fehlerhaft zu quantifizieren. Die Angabe einzelner Parameter (wie Zusammensetzung des Bodens) reicht in der Regel nicht aus, um die Komplexität eines von der Fernerkundung erfassten Systems hinreichend genau zu beschreiben. Um den Einfluss bestimmter Phänomene dennoch quantitativ einschätzen und damit auch in technischen Systemen (die die Fernerkundungsdaten nutzen) berücksichtigen zu können, sind Methoden und Verfahren zur Zustandsbeschreibung (z.B. Messsysteme in Verbindung mit Umweltmodellen) und Hilfsparameter (z.B. synthetische Parameter, Indizes) ein bewährtes Hilfsmittel. Grundsätzlich liefert ein synthetisch ableitbarer Parameter ein aussagekräftiges Maß der Eigenschaften eines komplexen Messsignals (z. B. des gemessenen Reflexionsgrades). Durch eine generalisierte Definition und darauf aufsetzende Messvorschriften sind die Parameter international eindeutig bestimmbar und können in technischen Systemen zur Abschätzung signifikanter Einflussfaktoren genutzt werden.

Zur Entmischung der oben erwähnten Mischsignale werden üblicherweise reale Endmember-Spektren genutzt. Als Endmember werden Objekte der Fernerkundung bezeichnet, die nur einer Klasse oder Unterklasse zuzuordnen sind (z. B. Boden, Ton, Sand, Schnee oder reifer Weizen). Diese Endmember-Spektren werden in Labors gewonnen. Problematisch dabei ist die Tatsache, dass die Qualität des Endmember-Spektrums, d. h. insbesondere seine Realitätsnähe über den Erfolg der Signalentmischung bestimmt, Entspricht die Situation während der Aufnahme des Endmember-Spektrums nicht der Situation bei der Aufnahme des mit Hilfe des Endmembers zu entmischenden Mischspektrums, werden unrealistische, fehlerhafte Ergebnisse bei der Entmischung erzielt. Z.B. können der Beleuchtungswinkel der auf das Fernerkundungsobjekt einfallenden Strahlung und der Feuchtegehalt zu unterschiedlichem Reflexionsverhalten führen.

Das Dokument US 6804400 B1 offenbart ein Verfahren zum Erzeugen von Endmember-Spektren.

Es ist eine Aufgabe der vorliegenden Erfindung, ein Verfahren zum Erzeugen von Endmember-Spektren anzugeben, so dass mit den erhaltenen Spektren eine präzisere und zuverlässigere Entmischung gemessener Spektren von realen Objekten möglich ist.

Gemäß einem grundlegenden Gedanken der vorliegenden Erfindung werden stabile spektrale Zusammenhänge in einer Mehrzahl realer Spektren betrachtet. Unter realen Spektren werden Spektren verstanden, die von realen Objekten der Fernerkundung gewonnen wurden. Die realen Spektren können aber z.B. im Labor gewonnen werden. Sie müssen nicht selbst durch Fernerkundung gewonnen werden.

Vorzugsweise sind die realen Objekte, von denen die realen Spektren gewonnen wurden, derselben Klasse oder Unterklasse von Objekten der Fernerkundung zugeordnet, z.B. Boden. Die einzelnen realen Spektren unterscheiden sich z.B. dadurch voneinander, dass die realen Objekte unterschiedliche Zusammensetzungen aufweisen, die Beleuchtung sich bei der Aufnahme der Spektren unterschieden hat und/oder zusätzliche Faktoren (wie z.B. unterschiedlicher Feuchtegehalt) bei der Aufnahme der Spektren zu unterschiedlichen spektralen Verläufen der gemessenen Größe oder der gemessenen Größen führten. Die gemessene Größe ist beispielsweise die Intensität des von dem Messsensor empfangenen, von dem Messobjekt reflektierten Lichts oder der Reflektionsgrad. Allgemeiner kann davon gesprochen werden, dass ein oder mehrere Parameter (d.h. für jeweils ein bestimmtes Spektrum charakteristische Konstante) über die Mehrzahl der realen Spektren variiert und daher unterschiedliche reale Spektren vorliegen.

Gemäß dem Grundgedanken der Erfindung, der oben erwähnt wurde, werden nun die stabilen spektralen Zusammenhänge ermittelt. Darunter wird verstanden, dass über alle untersuchten realen Spektren verschiedene spektrale Bereiche (z.B. verschiedene Spektralbänder) existieren, deren durch das Spektrum zugeordnete Werte (z.B. der Reflexionsgrad) in einem stabilen Zusammenhang zueinander stehen. Unter stabil wird verstanden, dass der Zusammenhang über sämtliche realen Spektren, die untersucht werden, nicht oder nicht wesentlich variiert. Z.B. wird eine Messgröße für den Zusammenhang definiert und wird ein Grenzwert festgelegt, den die Messgröße nicht überschreiten darf, damit es sich um einen stabilen Zusammenhang handelt.

Durch einen solchen stabilen Zusammenhang ist es wesentlich präziser und zuverlässiger möglich, synthetische Spektren zu erzeugen, wobei die synthetischen Spektren Beobachtungsobjekten entsprechen, für die andere Parameterwerte gelten. Selbstverständlich ist es aber auch möglich, dass ein Spektrum eines der realen Objekte synthetisch generiert wird.

Insbesondere wird ein Verfahren zum Erzeugen synthetischer Spektren auf Basis einer Mehrzahl realer Spektren vorgeschlagen, wobei

- für jedes der realen Spektren eine Mehrzahl von Differenzen der Werte des Spektrums bei verschiedenen Wellenlängen gebildet werden, sodass eine Mehrzahl von Wertedifferenzen erhalten wird, wobei die Wertedifferenzen jeweils einem Paar unterschiedlicher Wellenlängen zugeordnet sind,
- für jedes Paar der unterschiedlichen Wellenlängen ein Abweichungsmaß ermittelt wird, das aussagt, wie stark die dem Paar zugeordneten Wertedifferenzen über alle realen Spektren voneinander abweichen,
- zumindest ein Paar der unterschiedlichen Wellenlängen ermittelt wird, für das das Abweichungsmaß gemäß einem vordefinierten Kriterium gering ist, d.h. die Werte der realen Spektren dieser unterschiedlichen Wellenlängen in einer stabilen Beziehung zueinander stehen (stabile Wellenlängen),
- unter Verwendung der Werte der stabilen Wellenlängen als Stützstellen synthetische Spektren berechnet werden und/oder Informationen zur späteren Erzeugung der synthetischen Spektren gespeichert werden.

Das Verfahren kann insbesondere durch einen Computer oder ein Computernetz ausgeführt werden. Dementsprechend gehört zum Umfang der Erfindung auch ein Computerprogramm, das nach dem Laden in einen Arbeitsspeichers eines Computers oder Computernetzes den Computer oder das Computernetz veranlasst, das Verfahren auszuführen.

Bei einer bevorzugten Ausgestaltung des Verfahrens können zur Vorbereitung der Erzeugung der synthetischen Spektren durch eine statistische Auswertung der realen Spektren statistische Zusammenhänge zwischen den Stützstellen (d.h. den Stellen und zugeordneten Werten der Wellenlängen mit stabiler Beziehung zu anderen Wellenlängen) einerseits und anderen Wellenlängen der realen Spektren andererseits ermittelt werden. Aus den statistischen Zusammenhängen für die anderen Wellenlängen kann jeweils ein Qualitätsmaß ermittelt werden, das angibt, mit welcher Sicherheit ausgehend von einer oder mehreren Stützstellen auf den zugeordneten Wert einer der anderen Wellenlängen geschlossen werden kann.

Ein solches Qualitätsmaß ermöglicht es, bei den später erzeugten synthetischen Spektren auch die Qualität des synthetisch erzeugten Wertes anzugeben. Unter Qualität ist entsprechend der erwähnten statistischen Auswertung insbesondere die Wahrscheinlichkeit zu verstehen, dass der synthetische Wert innerhalb eines definierten Bereichs um den richtigen Wert des Spektrums liegt. Z.B. kann die Standardabweichung als Qualitätsmaß angegeben werden.

Zum Umfang der Erfindung gehört ferner eine Anordnung zum Erzeugen synthetischer Spektren auf Basis einer Mehrzahl realer Spektren. Die Anordnung weist insbesondere eine Einrichtung zur Differenzwertbildung, eine Einrichtung zur Analyse und Bewertung von Abweichungen, eine Ermittlungseinrichtung zur Ermittlung der stabilen Wellenlängen und eine Einrichtung zur Erzeugung zumindest eines synthetischen Spektrums oder zur Speicherung der dafür erforderlichen Informationen. Zu den Funktionsweisen der genannten Einrichtungen und zu ihren Vorteilen wird auf die Beschreibung des erfindungsgemäßen Verfahrens verwiesen.

Insbesondere kann das Verfahren in zwei Stufen ausgeführt werden. In der ersten Stufe, der Voranalyse, werden aus realen Endmember-Spektren die erforderlichen Grundlagen zur Erzeugung synthetischer Endmember ermittelt und bereitgestellt. In der zweiten Stufe werden daraus die synthetischen Endmember abgeleitet oder die dafür erforderlichen Informationen gespeichert.

Insbesondere können gemäß der Erfindung synthetische Endmember-Spektren automatisch abgeleitet werden, wenn ein Satz realer Spektren zur Verfügung steht.

Es ist ein Vorteil der Erfindung, dass die Ableitung der synthetischen Endmember-Spektren physikalisch begründet ist. Die Ableitung beruht auf der Erkenntnis, dass aufgrund physikalischer Effekte, wie z. B. einer für verschiedene Wellenlängen gleichartigen Beeinflussung des Reflexionsverhaltens durch eine Veränderung des Feuchtegehalts, stabile Beziehungen zwischen den durch die Spektren definierten Werten (z. B. des Reflexionsrades) bei verschiedenen Wellenlängen bestehen. Anders ausgedrückt enthalten die Spektren Spektralbereiche (Wellenlängen), für die die Beziehung oder das Verhältnis der Werte zueinander durch die Veränderung der Parameter (z. B. Feuchtegehalt, Beleuchtungswinkel) nicht oder nur sehr geringfügig beeinflusst wird. Dabei liegen die verschiedenen Spektralbereiche mit solch stabiler Beziehung der Werte nicht oder nicht zwangsläufig nahe beieinander, d.h. sie bilden nicht einen durchgehenden Spektralbereich. Z. B. ist es für die Ableitung der synthetischen Spektren von noch größerem Nutzen, wenn eine solche stabile Beziehung der Werte für einen sehr niedrigen (z. B. 450 nm Wellenlänge) und einen sehr hohen (z. B. 2200 nm) spektralen Wert besteht.

Die erzeugten synthetischen Endmember-Spektren können als Grundlage einer linearen spektralen Entmischung (Unmixing) von hyperspektralen Fernerkundungsdaten (insbesondere im Subpixelbereich) genutzt werden. Mischpixel sind Pixel, die einen heterogenen Inhalt aufweisen. D. h. z. B. dass das Pixel von Objekten unterschiedlicher Klassen reflektierter Strahlung entspricht: Der gemischte Wert eines Pixels ergibt sich durch die Integration der von verschiedenen Objektflächen ausgehenden reflektierten Strahlung (verschiedene Materialien und deren unterschiedliche spektrale Eigenschaften), die durch das Gesichtsfeld des Pixels abgedeckt werden. Z. B. in an sich bekannter Weise kann mit Hilfe eines Modells der linearen spektralen Entmischung, die spektrale Mischung invertiert werden, indem eine Trennung der Signalkomponenten (jede Signalkomponente, die zu dem Pixelwert beigetragen hat, entspricht einem Endmember) und eine Quantifizierung ihres Anteils vorgenommen wird. Grundlage des Entmischungs-Verfahrens sind einerseits identifizierte Spektralzusammenhänge (z. B. trägt Boden zum durch das Pixel erfassten Signals bei) und andererseits des in den Fernerkundungsdaten gemessenen Pixelspektrums.

Ein weiterer Vorteil der Erfindung betrifft die Sicherheit, dass ein solcher spektraler Zusammenhang zu einer bestimmten Klasse von Endmembern (z.B. Boden) vorliegt. Zeigt das zu entmischende Spektrum nämlich nicht einen spektralen Verlauf, der mit den oben erwähnten stabilen Beziehungen bestimmter Wellenlängen übereinstimmt oder zumindest damit und weiteren Endmember-Klassen zu erklären ist, kann daraus geschlossen werden, dass die Endmember-Klasse nicht in dem untersuchten Objekt vorkommt. Die Entmischung von Mischpixeln (z. B. Wiese, Getreide - Vegetation und Boden) ist insofern schwierig, als dass verschiedene Endmember-Spektren als gegeben vorausgesetzt werden müssen, Insbesondere bei Bodenspektren muss aber davon ausgegangen werden, dass die Bodenfeuchte die absoluten Spektralwerte beeinflusst. Soll ein synthetisches Endmember-Spektrum als Grundlage für die spektrale Entmischung erstellt werden, muss sich dieses auf der Grundlage relativ stabiler Spektraleigenschaften erstellen lassen. Dazu müssen entsprechende relativ statische Spektraleigenschaften abgeleitet werden können.

Die synthetischen Endmember-Spektren können in sich anschließenden quantitativen Auswerteverfahren oder industriellen Anwendungen weiter verarbeitet werden. Die für eine nachfolgende Weitemutzung effektive Beschreibung des Mischsignals wird erreicht, indem im Labor ermittelte Endmember-Spektren (unter unterschiedlichsten Bedingungen, wie sie während eines Aufzeichnungsprozesses von Fernerkundungsdaten auftreten können) ermittelt und auf relativ stabile spektrale Charakteristika hin untersucht werden. Dazu können die dafür erforderlichen Proben (z.B. Bodenproben) in definierten Gebieten (lokal, regional, global) geeignet zusammengefasst werden. Dies geschieht z. B. durch die Assimilation aller verfügbaren Endmemberdaten aus boden- und/oder satellitengestützten Fernerkundungsdaten (sofern diese eindeutig als Endmember definiert werden können) und/ oder lokalen insitu- Messungen.

Die Erfindung umfasst insbesondere auch ein numerisches Verfahren zur wissensbasierten Ableitung synthetischer Endmember-Spektren. Auf ein Ausführungsbeispiel wird noch anhand der Figuren näher eingegangen.

Ausführungsbeispielen und weitere Merkmale der Erfindung werden nun unter Bezugnahme auf die beigefügte Zeichnung beschrieben. Dabei können die im Folgenden offenbarten Merkmale einzeln oder in beliebiger Kombination bei Ausführungsform der Erfindung vorhanden sein. Die einzelnen Figuren der Zeichnung zeigen:

Fig. 1  eine Anordnung zur Erzeugung synthetische Endmember-Spektren, die auch als Flussdiagramm zur Darstellung einer bevorzugten Ausführungsform des erfindungsgemäßen Verfahrens aufgefasst werden kann,

Fig. 2  eine Anordnung zur Aufnahme von Fernerkundungsdaten eines Objekts an der Erdoberfläche,

Fig. 3  eine Ergebnismatrix mit Ergebnissen für das Abweichungsmaß, welches aussagt, wie stark die Wertedifferenzen über alle untersuchten realen Spektren voneinander abweichen,

Fig. 4  Ergebnisse einer statistischen Auswertung der Zusammenhänge zwischen Stützstellen und anderen Wellenlängen der untersuchten realen Spektren,

Fig. 5  ein Ergebnis einer statistischen Auswertung der Zusammenhänge zwischen einer Stützstelle und anderen Wellenlängen für eines der untersuchten realen Spektren,

Fig. 6  ein reales Spektrum zur Darstellung der Differenzbildung zwischen benachbarten Spektralbändern,

Fig. 7  ein Diagrammen zur Darstellung, wie eine Halbmatrix mit Wertedifferenzen aus dem in Fig. 6 dargestellten realen Spektrum gefüllt wird,

Fig. 8  ein Diagramm zur Darstellung des Einflusses des Wasserabsorption in der Atmosphäre auf die Reflexionsspektren von Boden,

Fig. 9  ein weiteres Ergebnis einer statistischen Auswertung der Zusammenhänge zwischen einer Stützstelle und anderen Wellenlängen für eines der untersuchten realen Spektren und

Fig. 10  noch ein weiteres Ergebnis einer statistischen Auswertung der Zusammenhänge zwischen einer Stützstelle und anderen Wellenlängen für eines der untersuchten realen Spektren.

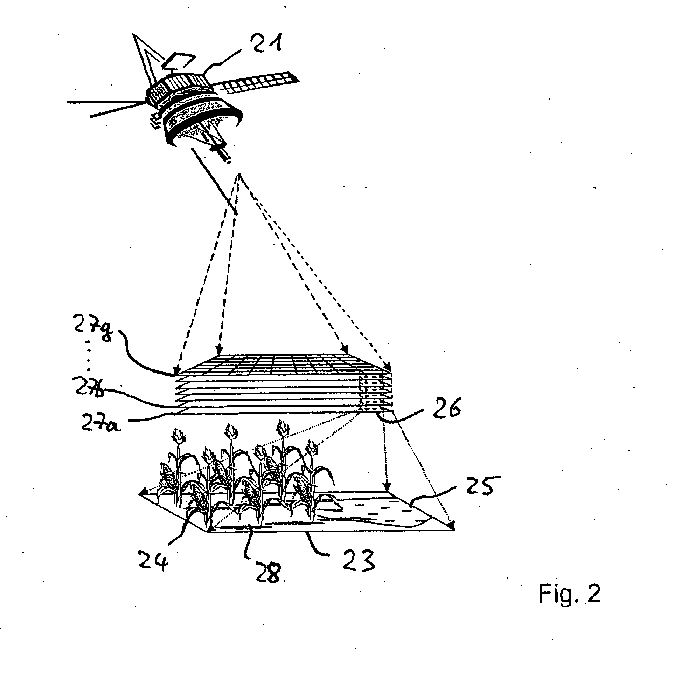

Gemessene Spektren werden (wie in Fig. 2 dargestellt ist) in der Fernerkundung z. B. von einem Sensor aufgenommen, der an einem Erd-Satelliten 21 angeordnet ist. Im Fall eines hyperspektralen Sensors, der einen zweidimensionalen Bildbereich erfassen kann, (oder bei einer entsprechenden Kombination mehrerer Sensoren) wird für jedes Spektralband ein zweidimensionales Bild mit mehreren Pixeln erfasst. Die zweidimensionalen Bilder sind in Fig. 2 durch übereinander liegende Raster 27a bis 27g dargestellt. Im Fall eines hyperspektralen Sensors sind in der Praxis wesentlich mehr Spektralbänder vorhanden als in Fig. 2 dargestellt. Ein Pixel, das einem bestimmten erfassten örtlichen Teilbereich 23 entspricht, ist in Flg. 2 mit dem Bezugzeichen 26 bezeichnet. Dieser örtliche Teilbereich 23 enthält eine Mischung verschiedener Objektklassen, nämlich Mais 24, Boden 28 und Wasseroberfläche 25.

Zur Entmischung solcher Mischpixel werden gemäß der Erfindung synthetische Endmember-Spektren eingesetzt, die beispielsweise wie im Folgenden beschrieben erzeugt werden.

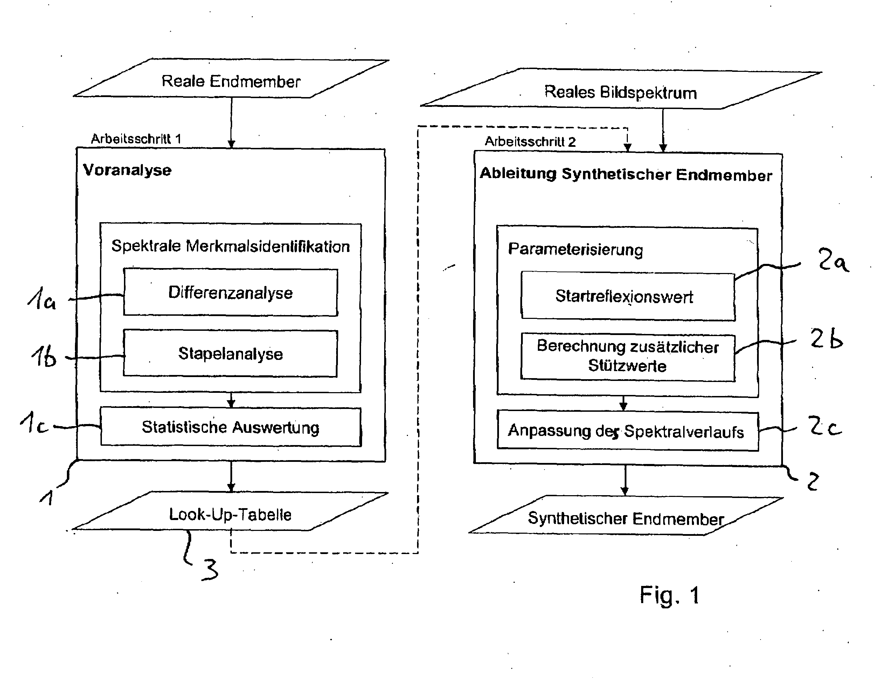

Fig. 1 zeigt eine Anordnung zur Erzeugung synthetischer Endmember-Spektren. Anhand der Figuren kann jedoch auch die bevorzugte Ausführungsform des erfindungsgemäßen Verfahrens beschrieben werden. Die Anordnung weist eine Voranalyse-Einrichtung 1 und eine Erzeugungseinrichtung 2 auf. Die Voranalyse-Einrichtung 1 weist eine Einrichtung 1 a zur Differenzwertbildung, eine Einrichtung 1 b zur Analyse und Bewertung von Abweichungen und eine Einrichtung 1c zur statistischen Auswertung auf. Die Erzeugungseinrichtung 2 weist eine Einrichtung 2a zur Ermittlung eines Startwertes, eine Einrichtung 2b zur Berechnung weiterer Werte und eine Einrichtung 2c zur Anpassung des spektralen Fall aus auf. Ferner ist eine Look-Up-Tabelle 3 (die z. B. Teil einer Daten-Speichereinrichtung ist) vorgesehen. In der Tabelle 3 können die Ergebnisse der Voranalyseeinrichtung 1 abgelegt werden, sodass die Erzeugungseinrichtung 2 zur Erzeugung der synthetischen Endmember-Spektren darauf zugreifen kann. Das Ablegen der Daten kann insbesondere dann erfolgen, wenn das Modell der Auswertung gemessener Spektren für regionale (auf das Untersuchungsobjekt bezogen) Gegebenheiten angepasst oder für neue Endmember geschult werden soll.

Eingangsdaten der Voranalyse sind reale Endmember-Spektren die z. B. bestimmten definierten Materialien, Oberfläche und/oder Landnutzungsarten entsprechen, welche die optischen Eigenschaften der Messobjekten beeinflussen. Im hier dargestellten Ausführungsbeispiel handelt es sich bei den Untersuchungsobjekten um Böden, die bei verschiedenen Beleuchtungsbedingungen und Feuchten analysiert wurden. Die Analyse zur Erstellung der Look-Up-Tabelle 3 muss in der Regel für ein zu untersuchendes Material / Oberfläche / Landnutzung nur einmal erfolgen, sofern das Modell für die Erstellung der synthetischen Endmember nicht für regionale Gegebenheiten angepasst oder für neue Endmember geschult werden soll.

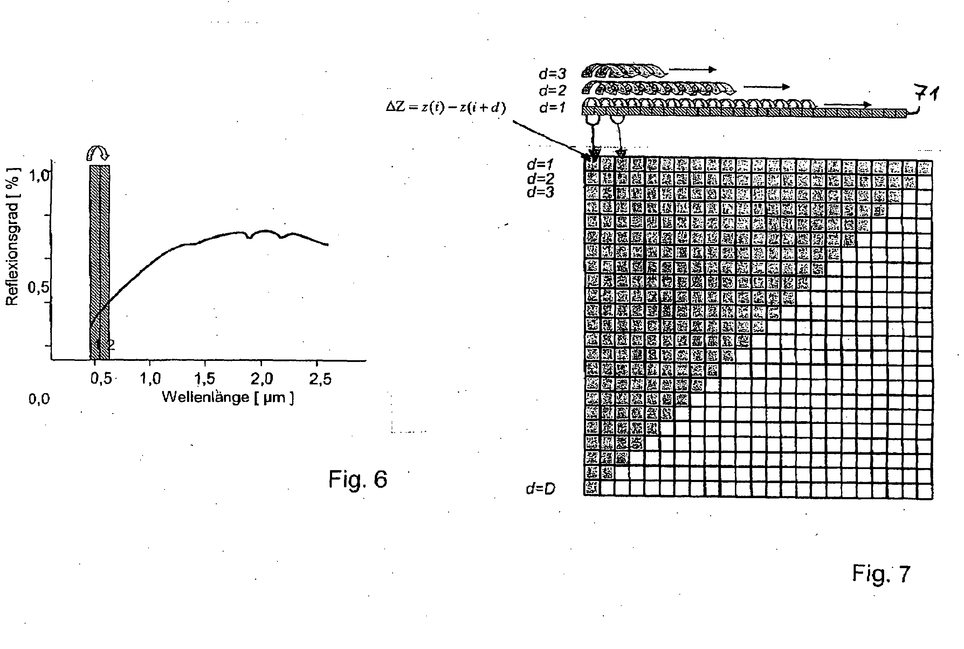

Das Modul "Spektrale Merkmalsidentifikation" in Fig. 1 beinhaltet die Einrichtungen 1 a, 1b zur Differenzanalyse, d.h. die Ableitung von n (n ist eine positive ganze Zahl, die gleicht der Anzahl der realen Spektren ist, die für die Analyse zur Verfügung stehen) Differenz-Halbmatrizen (siehe dazu Beschreibung der Figuren 6 und 7) zwischen den spektralen Bändern gemessener Bodenspektren, sowie zur Stapelanalyse. Das Modul greift auf die n vorhandenen reale Endmember-Spektren zu, wie durch den Block "realer Endmember" in Fig. 1 dargestellt ist. Unter einem Stapel wird hier eine Menge der aus den realen Endmember-Spektren erzeugten Halbmatrizen verstanden. Ziel dieser Analyse ist die Identifikation stabiler Spektralbereiche bzw. Wellenlängen. Darunter wird verstanden, dass eine stabile Beziehung der Werte zu den Werten anderer Wellenlängen besteht.

Nun wird ein Ausführungsbeispiel für die Berechnung und Auswertung der Differenzwerte beschrieben.

Fig. 6 zeigt ein reales Spektrum, d.h. den funktionalen Zusammenhang zwischen der Wellenlänge (hier im Bereich von ca. 490 nm bis 2600 nm) und dem gemessenen Wert (hier der Reflexionsgrad). Das Spektrum wurde zum Beispiel durch einen hyperspektralen Sensor aufgenommen. Es sind die Spektralbänder 1 und 2 des Hyperspektralsensors dargestellt. Fig. 7 zeigt im oberen Figurenteil eine Reihe 71 der Werte des in Fig. 6 dargestellten Spektrums, wobei die Reihe 71 von links nach rechts die Werte (Reflexionsgrade) der Bänder des Sensors in aufsteigender Reihenfolge der Wellenlänge enthält.

Ferner ist dargestellt, dass zunächst die Differenzen der unmittelbar benachbarten Werte der Reihe 71 gebildet werden (d=1). Diese Differenzen werden in die erste Zeile der darunter dargestellten Halbmatrix eingetragen. Für das Paar 1. Band / 2. Band und für das Paar 3. Band / 4. Band stellen von der Reihe 71 ausgehende und zu der ersten Zeile der Halbmatrix weisende Pfeile dar, wie die Halbmatrix mit Differenzwerten aufgefüllt wird. Die Zeilen der Halbmatrix sind durch den Zeilenindex d nummeriert. Die allgemeine Vorschrift zur Berechnung der Matrixwerte lautet:

$$\Delta Z = z(\,i\,) - z(\,i + d\,)$$

Dabei bedeutet $z(\,i\,)$ den i-ten Wert der Reihe von Werten aus dem realen Spektrum. In die zweite Zeile der Halbmatrix wird daher als erster Differenzwert die Differenz zwischen dem ersten Element der Reihe 71 und dem dritten Element der Reihe 71 eingetragen. In die dritte Zeile der Halbmatrix wird als erster Differenzwert die Differenz zwischen dem ersten Element der Reihe 71 und dem vierten Element der Reihe 71 eingetragen.

Z. B. wie beschrieben werden in der Einrichtung 1 a (Fig. 1) schrittweise die absoluten Differenzen der Reflexionswerte zwischen den einzelnen Spektralbändern $\lambda_{i,j,k}$ (hyperspektral aufgelöste Bodenspektren), d.h. ($\Delta_{.\lambda.} = S_{.\lambda k,i} - S_{.\lambda k,j}$) ermittelt und in einer Halbmatrix gespeichert. Im Beispiel erfolgen die Berechnungen auf der Basis von 810 realen Spektren, die auf insgesamt 135 verschiedenen Bodenproben in jeweils vier Feuchtegehalten und drei Beleuchtungswinkeln der einzelnen Strahlung beruhen. Darüber hinaus wurden in einem weiteren Versuch Vegetationsspektren erfindungsgemäß analysiert, um zu sichern, dass mindestens ein Paar stabiler Wellenlängen bei Vegetationsdaten ermittelt werden kann. Dies war der Fall.

In der Einrichtung 1 b (Stapelanalyse) wurde für alle 810 Halbmatrizen (die die Differenzwerte enthalten) die Spannweite SW über die Differenzen SW=MAX($\Delta_\lambda$)-MIN($\Delta_\lambda$) ermittelt. Dabei wurde die Spannweite jeweils separat für alle Paare $\Delta_\lambda$ von bestimmten Wellenlängen (z. B. 3. Band /4. Band, d.h. 3. Differenzwert in der ersten Zeile der in Fig. 7 dargestellten Matrix) berechnet. In einem anderen Ausführungsbeispiel wurde an Stelle der Spannweite ein statistisches Maß höherer Ordnung (z.B. die Standardabweichung) der Differenzwerte für das Paar von Wellenlängen berechnet.

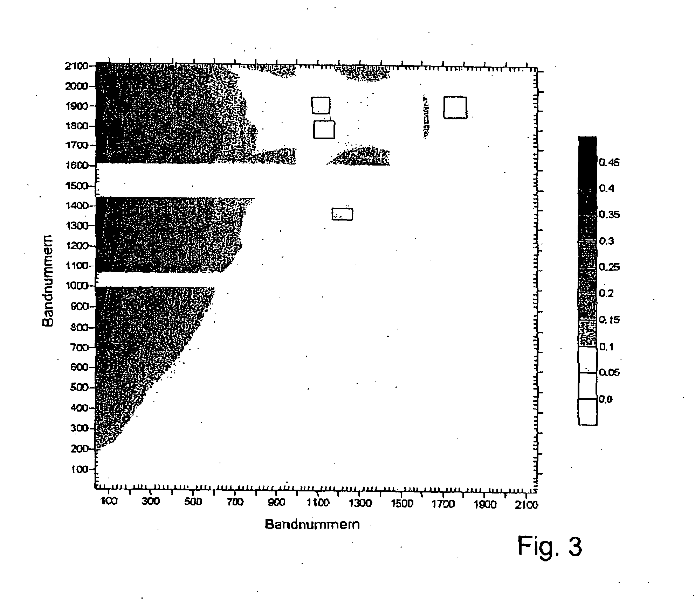

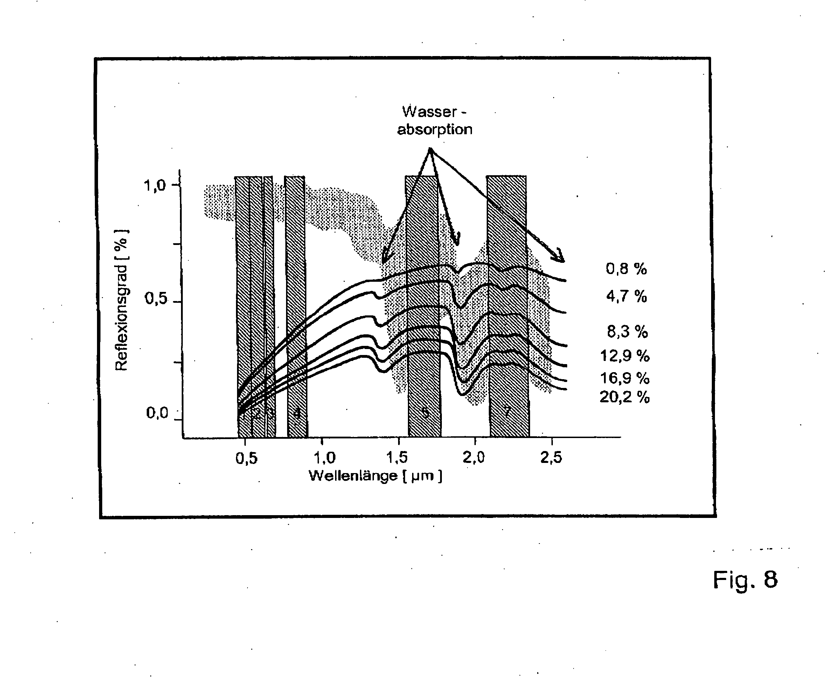

Als stabil werden Paare von Wellenlängen bezeichnet, für die kleine Spannweiten (oder kleine Standardabweichungen) ermittelt werden, d.h. z. B. kleiner als ein Grenzwert (z. B. Spannweite kleiner als 0,05). Die resultierende Halbmatrix, die die Spannweiten über alle Halbmatrizen der Differenzwerte enthält, ist in Fig. 3 dargestellt. Je dunkler die dargestellten Bereiche sind, desto größer ist die Spannweite. Die vier rechteckigen Markierungen enthalten Regionen (d. h. die Zonen mit Paaren von Wellenlängen bzw. Spektralbänder), In denen die Spannweite der analysierten Spektren kleiner als 0,05 ist. Diese Bereiche werden im Weiteren als relativ stabile Spektralregionen bezeichnet. Die Wellenlänge (in nm) entspricht in Fig. 3 der Bandnummer plus 349. Die ausgeblendeten, weiß markierten Halbmatrizenbereiche entsprechen den Wasserabsorptionsbanden der Atmosphäre. Fig. 8 zeigt den Einfluss der Wasserabsorption. In den mit drei Pfeilen angedeuteten Spektralbereichen wird der Reflexionsgrad abhängig von dem Feuchtegehalt (0,8 % bis 20,2 %) stark beeinflusst. Dieser Effekt wird in dem Ausführungsbeispiel durch Ausblenden eliminiert.

Ergebnis des Moduls "spektrale Merkmalsidentifikation" in Fig. 1 sind die über alle n Endmember-Spektren ermittelten und in der Ergebnismatrix (Fig. 3) mit vier kleinen Rechtecken dargestellten stabilen Regionen.

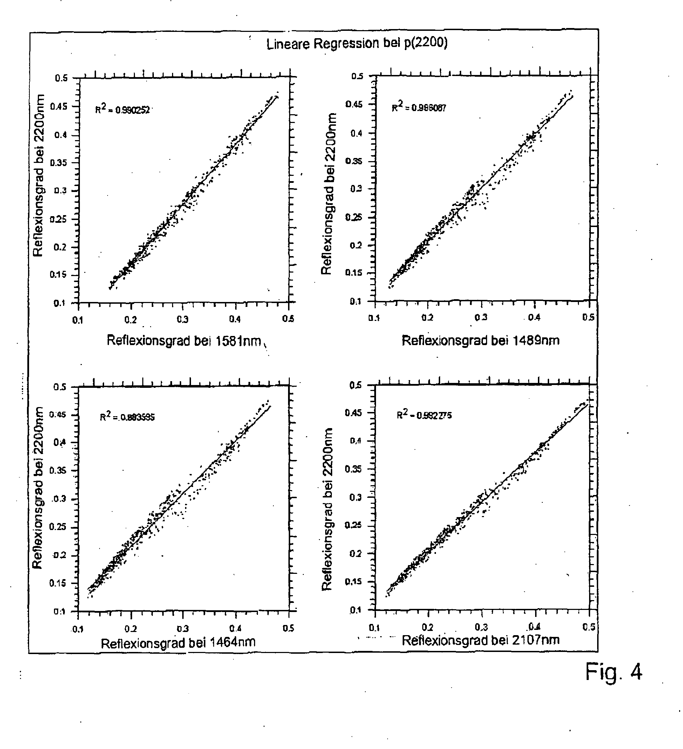

Das Einrichtung 1c "Statistische Auswertung" in Fig. 1 untersucht statistische Zusammenhänge zwischen den identifizierten stabilen Bereichen im Spektrum und weiteren Wellenlängen, um so zusätzliche spektrale Bereiche als Basis für die Erstellung synthetischer Endmember-Spektren bereit zu stellen. Ausgehend von den zuvor nachgewiesenen relativ stabilen, feuchteunabhängigen Spektralbereichen, erfolgen Regressionsanalysen über das gesamte Spektrum. Eine Auswahl der Ergebnisse ist in Fig. 4 dargestellt. Die Figur zeigt vier Diagramme, die sich alle auf eine stabile Wellenlänge bei 2200 nm als Stützstelle beziehen. Aufgetragen in den vier Diagrammen ist jeweils die Punktewolke der Reflexionsgrade sämtlicher realer Spektren für eine weitere Wellenlängen, nämlich 1581 nm, 1489 nm, 1464 nm und 2107 nm. Es ist gut erkennbar, dass in allen vier Fällen eine Ausgleichsgerade durch die Punktewolke gezogen werden kann. Als Bestimmtheitsmaß für die Bestimmung der Qualität einer solchen linearen Regression ist jeweils das Quadrat $R^2$ des Pearson-Korrelationskoeffizienten angegeben:

$$R = \frac{\sum (x - \bar{x})(y - \bar{y})}{\sqrt{\sum (x - \bar{x})^2 \sum (y - \bar{y})^2}}$$

Dabei sind x, y die Koordinaten der Punktwolke in einem zweidimensionalen kartesischen Koordinatensystem. Das Quadrat $R^2$ des Pearson-Korrelationskoeffizienten kann als der Anteil der Varianz von y, der durch die Varianz von x erklärt wird, Interpretiert werden. Der Pearson-Korrelationskoeffizient selbst ist ein dimensionsloser Index. Er weist einen Wertebereich von $-1,0 \leq R \leq 1,0$ auf. Der Index ist ein Maß dafür, inwieweit zwischen zwei Datensätzen eine lineare Abhängigkeit besteht und wie stark der Zusammenhang ist. Es ist auch möglich, ein anderes Bestimmtheitsmaß anzugeben

Das Bestimmtheitsmaß $R^2$ liegt in allen Fällen über 0,98, d.h. die Abweichung ist sehr gering. Daraus folgt, dass auf Basis der Stützstelle bei 2200 nm eine lineare Funktion angegeben werden kann, aus der sich zuverlässig der jeweilige Wert bei der anderen Wellenlängen berechnen lässt (lineare Regression), wenn ein synthetisches Spektrum erzeugt werden soll. Ferner sind die hohen Bestimmtheitsmaße $R^2$ ein Hinweis darauf, dass außer den Stützstellen auch andere Wellenlängen ermittelt werden können, die für eine Berechnung noch weiterer Wellenlängen als Basis einer lineare Regression genutzt werden können.

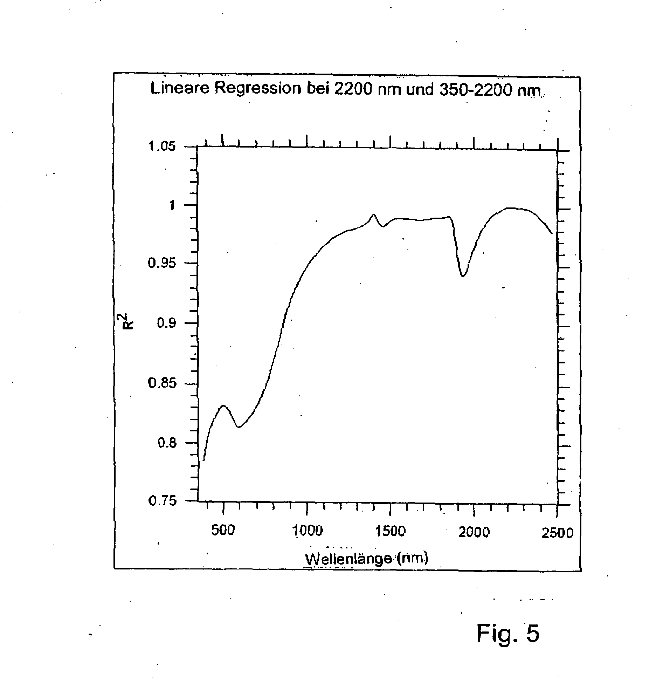

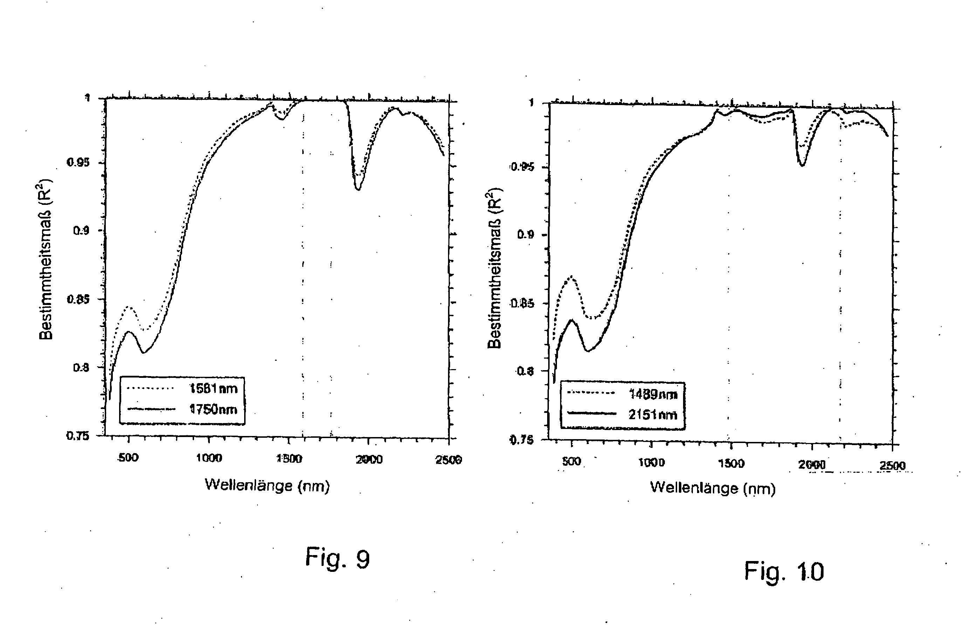

Fig. 5 zeigt für ein gesamtes synthetisches Spektrum, das auf Basis der Stützstelle bei 2200 nm durch lineare Regression berechnet wurde, das Bestimmtheitsmaß $R^2$. Über das gesamte Spektrum liegt das Bestimmtheitsmaß bei 0,79 und höher. Fig. 9 und Fig. 10 zeigen insgesamt vier weitere solcher synthetischen Spektren, die jedoch auf Basis anderer Wellenlängen als 2200 nm berechnet wurden. Auch hier sind die Bestimmtheitsmaße sehr hoch.

Das Verfahren kann, wie erwähnt, die beschriebenen spektralen Zusammenhänge nutzen, um andere Wellenlängen als Basis für die Berechnung synthetischer Spektren bereit zu stellen. Diese Wellenlängen sowie optional außerdem die zur Berechnung der synthetischen Spektren durch lineare Regression erforderlichen weiteren Informationen können in der Look-Up-Tabelle 3 abgelegt werden und stehen damit für eine spektrale Entmischung gemessenen Misch-Spektren zur Verfügung. In der Look-Up-Tabelle 3 können insbesondere statistische Werte gespeichert, wie: Regressionsparameter (Regressionskonstante, Regressionskoeffizient), das Bestimmtheitsmaß (Angabe der Stärke des Zusammenhangs zwischen den gemessenen Reflexionswerten der stabilen Regionen und der anderen Spektralbereiche als Qualitätsmaß).

Das Modul Parameterisierung (in Einrichtung 2, Fig. 1) dient der Gewinnung der für die Ableitung der synthetischen Endmember-Spektren erforderlichen Startwerte aus den Fernerkundungsdaten. Eingangsdaten für diesen Arbeitsschritt 2 sind in dem Ausführungsbeispiel die im Arbeitsschritt 1 identifizierten stabilen Spektralbereiche sowie atmosphärenkorrigierte hyperspektrale Fernerkundungsdaten (in Fig. 1 als reales Bildspektrum bezeichnet).

Die Einrichtung 2a "Startreflexionswert" liest die Reflexionswerte der Bildspektren an den als stabil definierten Regionen aus. Anhand des Bestimmtheitsmaßes $R^2$ (s.o.) werden dann die Bereiche des Spektrums ausgewählt, für die die Ableitung des synthetischen Spektrums auf Grundlage der in der Look-Up-Tabelle abgelegten Regressionsparameter erfolgen soll. Z. B. kann ein Grenzwert vorgegeben sein wenn dieser Grenzwert (Qualitätsschwelle) von dem Bestimmtheitsmaß überschritten ist, wird ein Bereich des Spektrums ausgewählt. Dieser Schritt erfolgt in Einrichtung 2b "Berechnung zusätzlicher Stützstellen", wobei unter Stützstellen hier nicht die Wellenlängen stabiler Bereiche zu verstehen sind. Es kann z. B. auch die Sprungweite der Wellenlängen, mit der diese Stützstellen ausgehend von vorhandenen Stützstellen ermittelt werden sollen, vorgegeben werden.

In den Bereichen, In denen die vorgegebene Qualitätsschwelle unterschritten wird, werden die Werte des synthetischen Spektrums ebenfalls über die in der Look-Up-Tabelle berechnet. Zusätzlich wird jedoch eine Anpassung der enthaltenen Regressionsparameter berechnet. Dieser Arbeitsschritt erfolgt in Einrichtung 2c "Anpassung des Spektralverlaufs". Als Ergebnis wird ein synthetisches Endmember-Spektrum erhalten ("synthetischer Endmember").

**Patentansprüche**

1. Verfahren zum Erzeugen synthetischer Spektren auf Basis einer Mehrzahl realer Spektren, wobei

   • für jedes der realen Spektren eine Mehrzahl von Differenzen der Werte des Spektrums bei verschiedenen Wellenlängen gebildet werden (1a), sodass eine Mehrzahl von Wertedifferenzen erhalten wird, wobei die Wertedifferenzen jeweils einem Paar unterschiedlicher Wellenlängen zugeordnet sind,
   • für jedes Paar der unterschiedlichen Wellenlängen ein Abweichungsmaß ermittelt wird (1b), das aussagt, wie stark die dem Paar zugeordneten Wertedifferenzen über alle realen Spektren voneinander abweichen,
   • zumindest ein Paar der unterschiedlichen Wellenlängen ermittelt wird, für das das Abweichungsmaß gemäß einem vordefinierten Kriterium gering ist, d.h. die Werte der realen Spektren dieser unterschiedlichen Wellenlängen in einer stabilen Beziehung zueinander stehen (stabile Wellenlängen)(1b),

   • unter Verwendung der Werte der stabilen Wellenlängen als Stützstellen eine Mehrzahl von synthetischen Spektren derselben Klasse von Beobachtungsobjekten berechnet wird (2) und/ oder Informationen zur späteren Erzeugung von einer Mehrzahl von synthetischen Spektren derselben Klasse von Beobachtungsobjekten gespeichert werden (3).

2. Verfahren nach dem vorhergehenden Anspruch, wobei durch eine statistische Auswertung der realen Spektren statistische Zusammenhänge zwischen den Stützstellen und anderen Wellenlängen der realen Spektren ermittelt werden (1 c) und aus den statistischen Zusammenhängen für die anderen Wellenlängen jeweils ein Qualitätsmaß ermittelt wird (1c), das angibt, mit welcher Sicherheit ausgehend von einer oder mehreren Stützstellen auf den zugeordneten Wert einer der anderen Wellenlängen geschlossen werden kann.

3. Verfahren nach einem der vorhergehenden Ansprüche, wobei gemessene Spektren unter Verwendung der berechneten synthetischen Spektren als Endmember-Spektren entmischt werden.

4. Computerprogramm, das nach dem Laden in einen Arbeitsspeichers eines Computers oder Computemetzes den Computer oder das Computemetz veranlasst, das Verfahren nach einem der Ansprüche 1 bis 3 auszuführen.

5. Datenträger, auf dem ein Computerprogramm nach dem vorhergehenden Anspruch gespeichert ist.

6. Anordnung zum Erzeugen synthetischer Spektren auf Basis einer Mehrzahl realer Spektren, wobei die Anordnung Folgendes aufweist:

   • eine Einrichtung zur Differenzwertbildung (1a), die ausgestaltet ist, für Jedes der realen Spektren eine Mehrzahl von Differenzen der Werte des Spektrums bei verschiedenen Wellenlängen zu bilden und **dadurch** eine Mehrzahl von Wertedifferenzen zu erhalten, wobei die Wertedifferenzen jeweils einem Paar unterschiedücher Wellenlängen zugeordnet sind,
   • eine Einrichtung (1 b) zur Analyse und Bewertung von Abweichungen, die ausgestaltet ist, für jedes Paar der unterschiedlichen Wellenlängen ein Abweichungsmaß zu ermitteln, wobei das Abweichungsmaß aussagt, wie stark die dem Paar zugeordneten Wertedifferenzen über alle realen Spektren voneinander abweichen,
   • eine Ermittlungseinrichtung (1b), die ausgestaltet ist, zumindest ein Paar der unterschiedlichen Wellenlängen zu ermitteln, für das das Abweichungsmaß gemäß einem vordefinierten Kriterium gering ist, d.h. die Werte der realen Spektren dieser unterschiedlichen Wellenlängen in einer stabilen Beziehung zueinander stehen (stabile Wellenlängen).

• eine Einrichtung (2), die ausgestaltet ist, unter Verwendung der Werte der stabilen Wellenlängen als Stützstellen eine Mehrzahl synthetischer Spektren derselben Klasse von Beobachtungsobjekten zu berechnen und/oder Informationen zur späteren Erzeugung einer Mehrzahl von synthetischen Spektren derselben Klasse von Beobachtungsobjekten zu speichern.

7. Anordnung nach dem vorhergehenden Anspruch, wobei die Anordnung ferner eine Auswertungseinrichtung (1c) aufweist, die ausgestaltet ist, durch eine statistische Auswertung der realen Spektren statistische Zusammenhänge zwischen den Stützstellen und anderen Wellenlängen der realen Spektren zu ermitteln und aus den statistischen Zusammenhängen für die anderen Wellenlängen jeweils ein Qualitätsmaß zu ermitteln, wobei das Qualitätsmaß angibt, mit welcher Sicherheit ausgehend von einer oder mehreren Stützstellen auf den zugeordneten Wert einer der anderen Wellenlängen geschlossen werden kann.

8. Anordnung nach einem der vorhergehenden Ansprüche, wobei die Anordnung ferner eine Entmischungseinrichtung aufweist, die ausgestaltet ist, gemessene Spektren unter Verwendung der berechneten synthetischen Spektren als Endmember-Spektren zu entmischen.

**Claims**

1. A method for producing synthetic spectra based on a plurality of real spectra, wherein:

    • a plurality of difference values for the spectrum at different wavelengths are produced (1a) for each of the real spectra, so that a plurality of difference values are obtained, wherein the difference values are each allocated to a pair of different wavelengths;
    • for each pair of the different wavelengths, a deviation (1b) is determined which states how much the difference values allocated to the pair deviate from each other over all real spectra;
    • at least one pair of the different wavelengths is determined for which the deviation with respect to a predefined criterion is small, i.e. the values for the real spectra are in a stable relationship with respect to said different wavelengths (stable wavelengths) (1 b);
    • by using the values for the stable wavelengths as nodes, a plurality of synthetic spectra from the same category of observed objects is computed (2) and/or information for the subsequent production of a plurality of synthetic spectra from the same category of observed objects is stored (3).

2. A method according to the preceding claim, wherein by means of a statistical analysis of the real spectra, statistical correlations between the nodes and other wavelengths of the real spectra are determined (1c) and a grade is determined (1c) from the statistical correlations for each of the other wavelengths, which indicates the certainty with which the allocated value of one of the other wavelengths can be ascertained from one or more nodes.

3. A method according to one of the preceding claims, wherein observed spectra are unmixed as end member spectra using the computed synthetic spectra.

4. A computer program which enables a computer or computer network to implement the method according to one of claims 1 to 3 following loading into an operating memory of a computer or computer network.

5. A data carrier on which a computer program according to the preceding claim is stored.

6. An arrangement for the production of synthetic spectra on the basis of a plurality of real spectra, wherein the arrangement comprises the following:

    • a device for producing difference values (1a) which is arranged, for each of the real spectra, to produce a plurality of difference values for the spectrum at different wavelengths and thus to obtain a plurality of difference values, wherein the difference values are each allocated to a pair of different wavelengths;
    • a device (1b) for analysis and evaluation of deviations, which is arranged to determine a deviation for each pair of the different wavelengths, wherein the deviation states how much the difference values allocated to the pair deviate from each other over all real spectra;
    • a determination device (1 b), which is arranged to determine at least one pair of the different wavelengths for which the deviation with respect to a predefined criterion is small, i.e. the values for the real spectra are in a stable relationship with respect to said different wavelengths (stable wavelengths);
    • a device (2), which is arranged to use the values for the stable wavelengths as nodes to compute a plurality of synthetic spectra from the same category of observed objects and/or to store information for the subsequent production of a plurality of synthetic spectra from the same category of observed objects.

7. An arrangement according to the preceding claim, wherein the arrangement further comprises an analytical device (1c) which is arranged to determine statistical correlations between the nodes and other wavelengths of the real spectra by means of a statistical analysis of the real spectra and to determine a grade for each of the other wavelengths from the statistical correlations, wherein the grade indicates the certainty with which the allocated value of one of the other wavelengths can be ascertained from one or more nodes.

8. An arrangement according to one of the preceding claims, in which the arrangement further comprises an unmixing device which is arranged to unmix observed spectra as end member spectra using the computed synthetic spectra.

**Revendications**

1. Procédé pour générer des spectres synthétiques sur la base d'une pluralité de spectres réels, sachant que,

   • pour chacun des spectres réels, il y formation d'une pluralité de différences entre les valeurs du spectre pour différentes longueurs d'ondes (1a), de sorte que l'on obtient une pluralité de différences de valeurs, les différences de valeurs étant respectivement associées à une paire de longueurs d'ondes différentes,
   • pour chaque paire des différentes longueurs d'ondes, un degré de divergence étant calculé (1 b), lequel indique dans quelle mesure les différences de valeurs associées à la paire divergent entre elles sur tous les spectres réels,
   • au moins une paire des différentes longueurs d'ondes étant déterminée, pour laquelle le degré de divergence est faible selon un critère prédéterminé, à savoir que les valeurs des spectres réels de ces différentes longueurs d'ondes présentent un rapport stable entre elles (longueurs d'ondes stables) (1 b),
   • grâce à l'utilisation des valeurs des longueurs d'ondes stables en guise d'emplacements de référence, une pluralité de spectres synthétiques de la même classe d'objets d'observation étant calculée (2) et/ou des informations pour la génération ultérieure d'une pluralité de spectres synthétiques de la même classe d'objets d'observation étant mises en mémoire (3).

2. Procédé selon la revendication précédente, sachant que, grâce à une analyse statistique des spectres réels, on détermine des rapports statistiques entre les emplacements de référence et d'autres longueurs d'ondes des spectres réels (1c), et à partir des rapports statistiques, un niveau de qualité étant respectivement déterminé pour les autres longueurs d'ondes (1c), lequel indique le degré de certitude permettant, en partant d'un ou plusieurs emplacements de référence, de déduire la valeur associée de l'une des autres longueurs d'ondes.

3. Procédé selon l'une quelconque des revendications précédentes, les spectres mesurés étant démixtés en utilisant les spectres synthétiques calculés en tant que spectres d'éléments d'extrémité.

4. Programme informatique lequel, une fois chargé dans une mémoire de travail d'un ordinateur ou d'un réseau informatique, fait en sorte que l'ordinateur ou le réseau informatique mette en oeuvre le procédé selon l'une quelconque des revendications 1 à 3.

5. Support de données sur lequel un programme informatique selon la revendication précédente est enregistré.

6. Dispositif pour générer des spectres synthétiques sur la base d'une pluralité de spectres réels, le dispositif présentant les éléments suivants:

   • une unité pour la formation des différences de valeurs (1a) laquelle, pour chacun des spectres réels, est réalisée pour former une pluralité de différences entre les valeurs du spectre pour différentes longueurs d'ondes, et pour obtenir de la sorte une pluralité de différences de valeurs, les différences de valeurs étant respectivement associées à une paire de longueurs d'ondes différentes,
   • une unité (1b) pour l'analyse et l'évaluation des divergences, laquelle est réalisée pour déterminer un degré de divergence pour chaque paire des différentes longueurs d'ondes, le degré de divergence indiquant à quel point les différences de valeurs associées à la paire divergent entre elles sur tous les spectres réels,
   • une unité de recherche (1b), laquelle est réalisée pour rechercher au moins une paire des différentes longueurs d'ondes pour laquelle le degré de divergence est faible selon un critère prédéterminé, c'est-à-dire que les valeurs des spectres réels de ces différentes longueurs d'ondes présentent un rapport de stabilité entre elles (longueurs d'ondes stables),
   • une unité (2), laquelle est réalisée, en utilisant les valeurs des longueurs d'ondes stables en tant qu'emplacements de référence, pour calculer une pluralité de spectres synthétiques de la même classe d'objets d'observation et/ou mettre en mémoire des informations pour la génération ultérieure d'une pluralité de spectres synthétiques de la même classe d'objets d'observation.

7. Dispositif selon la revendication précédente, le dispositif présentant également une unité d'analyse (1c) laquelle est réalisée, grâce à une analyse statistique des spectres réels, pour déterminer des rapports statistiques entre les emplacements de référence et d'autres longueurs d'ondes des spectres réels, et pour déterminer à partir des rapports statistiques, respectivement un niveau de qualité pour les autres longueurs d'ondes, le niveau de qualité indiquant le degré de certitude permettant, en partant d'un ou plusieurs emplacements de référence, de déduire la valeur associée de l'une des autres longueurs d'ondes.

8. Dispositif selon l'une quelconque des revendications précédentes, le dispositif présentant par ailleurs une unité de démixtion, laquelle est réalisée pour la démixtion des spectres mesurés en utilisant les spectres synthétiques calculés en guise de spectres d'éléments d'extrémité.

Fig. 1

Fig. 2

Fig. 3

Fig. 4

Fig. 5

EP 1 986 127 B1

$\Delta Z = z(i) - z(i+d)$

$d=3$
$d=2$
$d=1$

71

$d=1$
$d=2$
$d=3$

$d=D$

Reflexionsgrad [ % ]

1,0

0,5

0,0

0,5   1,0   1,5   2,0   2,5

Wellenlänge [ µm ]

Fig. 6

Fig. 7

Fig. 8

EP 1 986 127 B1

Fig. 10

Fig. 9

**IN DER BESCHREIBUNG AUFGEFÜHRTE DOKUMENTE**

**In der Beschreibung aufgeführte Patentdokumente**

- US 6804400 B1